# EUROPEAN PATENT APPLICATION

(11) **EP 1 072 622 A1**
(43) Date of publication of application: **31.01.2001**
(21) Application number: 00114993.9
(22) Date of filing: 21.07.2000
(51) Int. Cl.: C08G 18/16, C09J 175/04, C08G 18/48

(54) **Temperature critical catalysis of curable polyurethanes**

(30) Priority: 30.07.1999 US 364153
(71) Applicant: BAYER ANTWERPEN N.V., 2040 Antwerpen (BE)
(72) Inventor: Holeschovsky, Ulrich B., Exton, PA 19341 (US); Gibala, David, Downingtown, PA 19335 (US); Robbins, Jeffrey L., Phoenixville, PA 19460 (US); Soltani-Ahmadi, Ahmad, Wilmington DE 19808 (US)
(74) Representative: Perchenek, Nils, Dr.

(57) **Abstract**

Use of temperature critical catalysts as urethane-promoting catalysts in polyurethane carpet adhesives provides urethane adhesives having long puddle life times while exhibiting short cure times. Polyurethane adhesives may be formulated with low primary hydroxyl content polyols while retaining curing speed. Low temperature cure useful with sensitive fiber and backing materials may be achieved.

## Description

### TECHNICAL FIELD

The present invention pertains to polyurethane systems useful for tuft bind adhesives and secondary backing adhesives in tufted carpet manufacture. The invention further pertains to polyurethane foam-backed carpets employing the polyurethane systems of the present invention.

### BACKGROUND ART

Tufted carpeting is manufactured by the insertion or "tufting" of fiber yarns into a woven backing, for example a backing of jute or polypropylene. Following tufting, a "precoat" adhesive must be applied to bind the tufted fibers into the backing. In many instances, a secondary backing, also generally of materials such as jute or polypropylene, is adhesively bonded to the back of the "greige good".

In the past, SBR and acrylic latex adhesives have been used for both applications. The latex adhesives are readily formulated to provide stable, viscous, and tacky dispersions which facilitate tuft binding and secondary backing adhesion. Latex adhesives have numerous drawbacks, however. Firstly, their cure requires removal of considerable quantities of water, which is energy intensive and therefore expensive. Secondly, the hydrolytic stability and durability of acrylic latex adhesives leave much to be desired.

Polyurethane adhesives do not possess the above-mentioned disadvantages of latex adhesives. Polyurethane adhesives may be supplied neat, rather than in aqueous dispersion, and thus do not require energy intensive water removal. Moreover, polyurethanes, particularly those based on polyethers, offer much greater hydrolytic stability than SBR and acrylic latexes. Durability of polyurethanes is also excellent. However, unlike latextes which are generally quite stable and only cure as water is removed, polyurethanes are reactive systems which exhibit only limited pot life.

The shorter pot life exhibited by polyurethanes has created difficulties in employing polyurethanes as carpet adhesives. In one commercial embodiment, for example, two "puddles" of polyurethane are used. Each "puddle" collects prior to a doctor blade or gauge bar or similar device as the underside of the tufted greige good passes underneath the bar or equivalent device. Troughs or skip coaters, which may be used in latex adhesives, cannot be used with polyurethanes, as the reactive ingredients will gel and cure in the stagnant areas in such devices. Even with "puddle" application, strands or globules of polyurethane may frequently be generated. Removal of cured polyurethane "on the fly" is often dangerous and difficult. Thus, polyurethane carpet adhesives have often been catalyzed with latent catalysts such as nickel acetylacetonate or special tin catalysts which exhibit low catalytic activity at lower temperatures and higher activity when the temperature is raised.

However, prior art catalysts have not proven entirely satisfactory for polyurethane carpet adhesive applications. These catalysts still exhibit considerable catalytic activity at the ambient temperatures of carpet manufacturing facilities, and thus, while exhibiting improved pot life, still exhibit unwanted gelling and polymerization, although at a reduced rate. Moreover, many of these catalysts exhibit incomplete cure at conventional oven temperatures and dwell times used in carpet manufacture. Use of lower temperature cure is impossible with such adhesive systems. However, low temperature cure is necessary for certain carpeting, for example carpeting prepared from polyethylene fibers. Thus, it has been impossible to employ polyurethane adhesives with such products.

It would be desirable to provide polyurethane systems which can be used as polyurethane carpet adhesives which display exceptional pot life, and yet which provide effective cure at conventional oven temperatures and dwell times. It would be further desirable to provide polyurethane adhesive systems which are curable at lower temperatures than prior art delayed action catalyst-based systems, and which can be used to prepare temperature-sensitive carpet products.

### DISCLOSURE OF INVENTION

It has now been surprisingly discovered that latent polyurethane catalysts contained in or bonded onto side chain crystalline (SCC) polymers or other polymers with sharply defined melting points above 40°C may be used in reactive polyurethane systems to simultaneously provide excellent gel time and faster elevated temperature cure. With proper selection of the catalyst-containing polymer, lower temperature curing systems are possible. This invention also permits use of polyols with high secondary hydroxyl group content which could not be used previously due to their low reactivity.

### BRIEF DESCRIPTION OF THE DRAWINGS

FIGURE 1 illustrates the low temperature cure which may be achieved with the compositions of the subject invention.
FIGURE 2 illustrates catalytic activity versus temperature for three hypothetical catalysts, a conventional catalyst (1), a delayed action catalyst (2), and a temperature critical catalyst (3).

### BEST MODE FOR CARRYING OUT THE INVENTION

The polyurethane reactive systems of the present invention generally employ, as principle reactive ingredients, a polyol component, an isocyanate component, and optionally a chain extender component. Conventional additives and auxiliaries are also optionally employed, e.g., fillers, pigments, cross-linkers, surfactants, blowing agents, plasticizers, and the like. A catalyst component is also required. The catalyst component will comprise a polyurethane-promoting catalyst contained, bonded to, or encapsulated within a polymer, preferably an SCC polymer, which has a sharply defined catalyst release point above 40°C, as hereinafter defined.

The polyol component may be selected from traditional polyurethane polyols, such as polyester polyols, polyether polyols, polycaprolactone diols, and the like, but preferably comprises one or more polyether polyols, more preferably polyether polyols having substantial oxypropylene group content. Most preferably, the polyol component comprises one or more low or ultra-low concentration polyoxypropylene polyols such as those having unsaturations of less than 0.020 meq/g, preferably about 0.0 15 meq/g or lower, and most preferably less than 0.010 meq/g. However, practice of the invention does not require low unsaturation polyol; conventional polyols process well also. Mixtures of polyols may be used. The polyols generally have nominal or "theoretical" functionalities of between 2 and 8, more preferably between 2 and 4. Average functionalities between about 1.9 and 3 are preferred, more preferably between 2.0 and 2.5.

The individual polyols may be homopolymers, block copolymers, random copolymers, block-random copolymers, and the like. Preferred polyols include polyoxypropylene homopolymer polyols, polyoxypropylene polyols capped with polyoxyethylene moieties, and polyoxypropylene/polyoxyethylene random copolymer polyols, particularly those containing a larger oxyethylene content at the polyol extremities. Polyoxypropylene diols and triols having a low polyoxyethylene content internal portion, e.g., 5 weight percent, and a higher oxyethylene external portion, e.g., 15 weight percent, are advantageously employed. Polymer polyols such as vinyl polymer dispersions prepared by in situ polymerization of one or more vinyl monomers in a base polyol, or polymer-modified polyols prepared by reaction of alkanolamine with a di- or polyisocyanate in a base polyol may also be employed.

The isocyanate component comprises one or more di- or polyisocyanates. The di- and polyisocyanates are those conventionally used, for example, but not by way of limitation, toluene diisocyanate (TDI), including the individual isomers; methylene diphenylene diisocyanate (MDI) and the individual isomers; polymethylene polyphenylene polyisocyanates (PMDI); isophorone diisocyanate and other aliphatic isocyanates; and modified isocyanates such as the carbodiimide-, uretonimine-, allophanate-, urethane-, urea-, biuret-, and isocyanurate-modified isocyanates. Many such modified isocyanates are commercially available.

The polyol component and isocyanate component can be employed as separate components and mixed prior to use, or may be used in the form of an isocyanate-terminated prepolymer or quasi-prepolymer. The prepolymer or quasi-prepolymer may contain all or only a portion of the polyol component. Such isocyanate-terminated prepolymers generally contain from about 4 weight percent to 35 weight percent free NCO groups, preferably 6 weight percent to 20 weight percent, and more preferably 6 weight percent to 18 weight percent NCO groups. Use of prepolymers is preferred. Mixtures of prepolymers and unreacted isocyanates are also useful.

Chain extenders such as ethylene glycol, propylene glycol, 1,3-propanediol, 2-methyl-1,3-propane diol, diethylene glycol, dipropylene glycol, triethylene glycol, tripropylene glycol, 1,4-butanediol, 1,6-hexanediol, 1,4-cyclohexanediol, cyclohexanedimethylol, and like compounds, generally having molecular weights below 300 Da, may be used.

Cross-linkers may also be employed. By the term "cross-linker" is meant tri- or higher functional low molecular weight compounds such as those known in the polyurethane arts, particularly glycerine, diethanolamine, triethanol amine, polyalkylenepolyamines, and the like.

The active hydrogen components, i.e., the polyol component, optional chain extender, optional cross-linker, and any other isocyanate-reactive compounds are reacted with the isocyanate component at an isocyanate index of from about 90 to about 120, preferably 95 to about 110, and most preferably about 95 to about 105.

The catalyst component may include minor amounts of traditional polyurethane catalysts such as he various tin and amine catalysts as well as traditional latent catalysts such as the metal acetylacetonates. By the term "minor" in this respect is meant less than 50 weight percent of the amount of catalyst which would be traditionally used as the sole catalyst. A "minor" amount of such catalysts will nor provide full cure under conventional processing conditions when used alone. For example, a polyurethane carpet adhesive employing only a minor amount of a conventional tin or amine catalyst will not fully cure upon exposure to 148°C for 5 minutes, but will, in general, remain in a liquid, gel-like or semisolid state.

The catalyst component necessarily includes an effective amount of a temperature critical catalyst ("TCC"). A TCC is a combination of polyurethane catalyst, preferably a highly active catalyst such as a bismuth, tin, or amine catalyst, with a polymer having a sharply defined catalyst release temperature ("SDCR polymer") in excess of 40°C, preferably in excess of 50°C. Such polymers are generally crystalline in nature, or have crystalline side chains, and generally exhibit rather sharp melting points (narrow melt range) as opposed to amorphous or only slightly crystalline polymers whose melt range is broad. The catalytic activity of such catalysts is distinctly non-linear and generally step-wise with respect to temperature, exhibiting no or only slight catalytic activity at temperatures below the melting point, followed by a sharp increase in activity at or shortly before the melting point. Prior art delayed action catalysts, on the other hand, do not exhibit this "step like" behavior, but rather generally exhibit a constantly (albeit not linearly) increasing catalytic activity as the temperature rises.

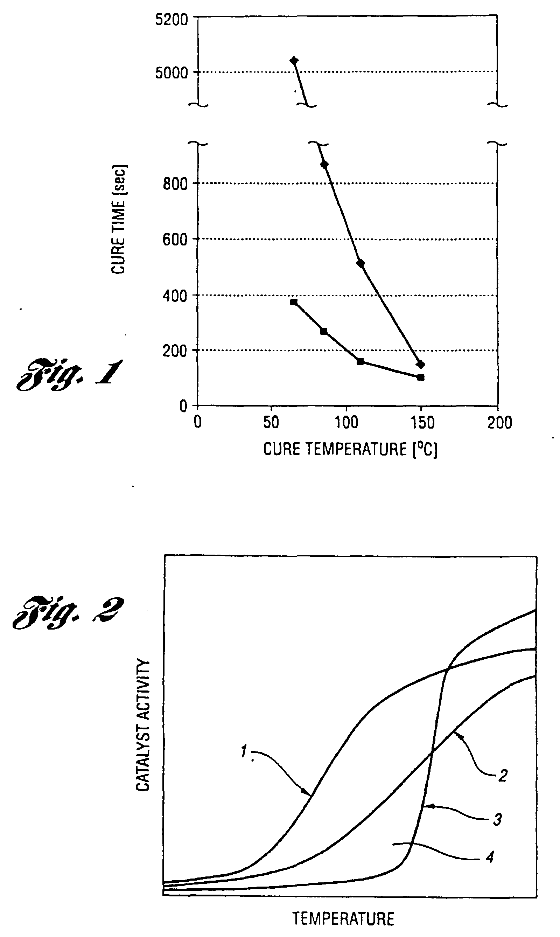

The catalyst behavior may be illustrated by reference to Figure 2, catalyst activity/temperature profiles. Curve 1 illustrates a conventional tin or amine catalyst. Curve 2 illustrates the behavior of a typical delayed action catalyst. Note that activity still increases with temperature, although more slowly than with a conventional catalyst.

Curve 3 illustrates a temperature critical catalyst. Little increase in catalytic activity occurs below the melting point of the entraining polymer. At the melting point, however, catalyst activity rises extremely rapidly until all catalyst is released. Following release, further increase in activity with temperature is noted. Area 4 is an area where delayed action catalyst activity is high enough to reduce pot life at these temperatures. Note that the ultimate activity of the TCC catalyst is higher than the delayed action catalyst at reasonable cure temperatures.

Preferably, the difference in temperature between the point at which the area between the base line and a Differential Scanning Calorimetry (DSC) curve for the temperature critical catalyst component itself has reached 10% of the total area bordered by the curve, and the peak of the DSC curve is no more than 20°C. The temperature at which the DSC curve returns to its base line is preferably no more than 100°C, and preferably less than 80°C.

The TCC of the present invention may be prepared by encapsulating conventional or "unconventional" (unconventional in the sense of being far too active to be conventionally used as polyurethane catalysts) catalysts into microcapsules whose walls comprise an SDCR polymer. Such microcapsules may be made by conventional methods known to those skilled in the art.

The TCC of the present invention may also be prepared by melt incorporating the conventional (or unconventional) polyurethane catalysts into an SDCR polymer, generally followed by extruding, granulating, grinding, or other operations efficient to produce a TCC catalysts which may be uniformly distributed in the polyurethane systems of the invention.

The TCC catalyst may also be reversibly or irreversibly chemically bonded to the SDCR polymer. Examples are an imidazole catalyst bonded to the polymer structure, a tertiary alkyl amine catalyst, one of whose alkyl groups are bonded to the SDCR polymer, or a tin catalyst such as a dibutyltin dicarboxylate where one or both of the carboxyl groups are derived from carboxyl groups contained in the SDCR catalyst. These Examples are illustrative and not limiting. By the term "entrained" is meant uniformly incorporated, i.e, by melt incorporation, solution incorporation, or incorporation by chemical bonding such that a relatively uniform distribution of catalyst resuks, as opposed to encapsulation, where catalyst distribution is not uniform.

The SDCR polymers may be oligomeric highly crystalline polymers of narrow molecular weight distribution, such as oligomeric polyethylenadipates, polybutylene adipates, polyethylene trephthalates, and similar polyesters, or acrylate homo-or copolymers such as poly(methylmethacrylate), poly(methylacrylate), and the like. Oligomeric and highly stereoregular polyethylene and polypropylene polymers may also be suitable. Such polymers may be prepared by conventional methodology. The suitability of such polymers for use as SDCR polymers may be assessed by observing their DSC curves. As with the TCC themselves, candidate polymers, particularly those which are used for microencapsulation, may have a DSC curve which approximates the desired DSC curve of the TCC. When catalysts which are melt incorporated or chemically bonded are used, the DSC curve may be shifted somewhat from that of the polymer itself, and thus polymer molecular weight and molecular weight distribution might require adjustment to provide the relatively low and sharp melt behavior.

Preferably, the catalysts are side chain crystalline polymers laden with active polyurethane catalysts. Examples of such polymers, methods useful for preparing the polymers, and active polyurethane catalysts may be found in U.S. patent numbers 5,665,822; 5,254,354; 5,783,302; 5,387,450; 5,156,911; 5,129,180; 4,830,855; and 5,120,349, which are herein incorporated by reference. Preferred active catalysts are tin catalysts such as dibutyltin diacetate, diethyltin diacetate, dibutyltin dilaurate, and tin octoate; and amine catalysts such a triethylene diamine. Dimethylaminoethylacrylate derived catalysts are also useful. Some such SCC - based catalysts are available commercially from the Landec Corporation under the name "Intelimer®" polymers.

The amount of catalyst required depends upon the released catalyst activity, the type of association between the active catalyst and the polymer, and the concentration of the former in the latter. If the catalyst is chemically bound, a greater amount of catalyst may be necessary as compared to amounts effective when the catalyst is encapsulated or trapped within an SCC matrix. The amount of catalyst required can be easily determined by standard tests, and the amount further tailored to the specific application by experimental design statistics. For example, amounts of catalyst which provide small cup gel times of from 30 seconds to 3 minutes and tack-free times of 1 to 10 minutes, preferably 1.5 to 5 minutes, at the targeted cure temperature are suitable for fine tuning. The catalyst composition may also contain small amounts of very highly active catalysts such as those derived from bismuth. When the latter are used with tin or amine catalysts, it is sometimes preferable that the catalyst release temperature, the temperature of the main DSC peak of the binding or encapsulating polymer containing the bismuth catalyst, be higher than that of the remaining catalyst. In this manner, adequate flow may be obtained, which will aid such physical properties as tuft bind, while full cure may still be achieved at reasonable cure (oven) times. For the case of Intelimer® catalysts 5012 and 96002, amounts of 0.05 to about 2.0 parts temperature critical catalyst per 100 parts resin side (polyol side), preferably 0.1 parts to 1 part, and most preferably 0.15 parts to 0.4 parts, are suitable.

The use of polyurethanes as a coating composition for textiles and carpets is partially limited to the upper melt temperatures or heat distortion temperatures of the components utilized in the construction of the material to be coated. For example, the oven temperature used to cure a polyurethane carpet coating adhesive (precoat or attached pad) must not cause temperature of the primary backing (usually polypropylene) or the face fibers (usually nylon or polypropylene) to exceed their respective melt temperatures or a temperature at which fiber shrinkage or distortion takes place.

Use of polyethylene, which has a lower melt temperature than either polypropylene or nylon, as the face fiber in synthetic athletic surfaces, artificial turf, would be desirable due to the lower coefficient of friction of the polymer. Such a construction results in a more natural feel compared to polypropylene fiber athletic surfaces. The commercial oven temperature for precoat application on polyethylene artificial turf is restricted to less than 165 F (74 C) so as to avoid fiber shrinkage. However, this severely limits the line speed, which in turn adversely affects the manufacturing economics. The required low temperature cure is the major draw back in advancing the widespread commercialization of polyethylene artificial turf. Although the use of a higher activity catalyst can result in fast cure at low temperature, it also reduces the puddle life and narrows the windows of operability to coat the textile or carpet. Any disruption or required slow down could be catastrophic with respect to reject rates and plant down-time.

It has been found that polymer-bound tin catalysts can be effectively used to cure textiles containing polyethylene at low temperature such as 150°F (64°C). Furthermore, the use of such catalysts permits both sufficient reactivity (speed of cure) while maintaining acceptable working time and puddle life, to coat these types of textiles.

In addition to the extension of application of polyurethane adhesives to temperature sensitive fibers and/or backings, the ability to cure at a lower temperature while maintaining adequate puddle life has several additional advantages. First, lower temperature cure is less energy intensive, allowing the process to be run at lower oven temperatures. Second, as the polyurethane froth viscosity tends to decrease significantly with increasing temperature, lower temperature cure allows viscosity to be maintained. Higher viscosity improves the tack of the uncured adhesive, and minimizes dripping, which might otherwise be problematic.

Having generally described this invention, a further understanding can be obtained by reference to certain specific examples which are provided herein for purposes of illustration only and are not intended to be limiting unless otherwise specified.

### Examples 1 - 3 and Comparative Examples C1- C2

Several carpet adhesive formulations were prepared. The polyols and catalysts used are the following:
Polyol A is a polyoxypropylene triol with a hydroxyl number of 36 having a 20 weight percent polyoxyethylene cap. The primary hydroxyl content is 82%.
Polyol B is a polyoxypropylene diol with a hydroxyl number of 40, having a 15 weight percent polyoxyethylene cap. The primary hydroxyl content is 75%. Both polyol A and polyol B are conventionally catalyzed, high primary hydroxyl content polyether polyols.
Polyol C is an ultra-low unsaturation polyoxypropylene triol with a hydroxyl number of 36, containing 20 weight percent of randomly distributed polyoxyethylene. The primary hydroxyl content is 26%.
Polyol D is an ultra-low unsaturation polyoxypropylene triol with a hydroxyl number of 40, containing 20 weight percent of randomly distributed polyoxyethylene. The primary hydroxyl content is 25%. Polyols C and D have high secondary hydroxyl content.
Catalyst A is a polymer bound tin catalyst provided by Landec Corporation, Menlo Park, California.
Catalyst B is Intelimer Polymer LC-96002 (Landec Corporation), which is an alkyl acrylate polymer containing 1,8-Diazabicyclo[5,4,0] undec-7-ene.
LC 5615 is a nickel acetylacetonate delayed action catalyst available from Witco, not within the scope of the invention.

The B-sides were mixed with 62 parts of Baytuft® 751 isocyanate in a plastic beaker for 1 minute using an impeller. After starting the viscosity measurements, about 30 grams of the froth were poured into an aluminum pie cup which was then placed into a curing oven set at 150°C. The viscosities were measured using a Brookfield DV-II + Viscometer using an S94 spindle turning at a rate of 5 rpm. The Puddle Life Time (PLT) is defined as the time required to increase the viscosity from the initial froth viscosity of about 2,000 cps to a viscosity of 20,000 cps. Since PLT depends on the starting temperature, the temperature of the B-side was adjusted to yield the desired starting temperature upon mixing with the A- side. Typically, the temperature of the froth increased by about 30°C during the PLT measurement.

**Table 1**

| **B-side Formulations** | | | | | |
|---|---|---|---|---|---|
| | **Example 1** | **Example 2** | **Comp. Example C1** | **Example 3** | **Comp. Example C2** |
| Polyol A | 65 | 65 | 65 | -- | -- |
| Polyol B | 18 | 18 | 18 | -- | -- |
| Polyol C | -- | -- | -- | 65 | 65 |
| Polyol D | -- | -- | -- | 18 | 18 |
| Diethylene Glycol | 16 | 16 | 16 | 16 | 16 |
| Wetting Agent | 1 | 1 | 1 | 1 | 1 |
| Aluminum Trihydrate | 60 | 60 | 60 | 60 | 60 |
| Calcium Carbonate | 120 | 120 | 120 | 120 | 120 |
| LC 5615 | -- | -- | 1.5 | -- | 1.5 |
| Catalyst A | 0.25 | -- | -- | 0.25 | -- |
| Catalyst B | -- | 0.3 | -- | -- | -- |

Table 2 list the results for PLT and cure time as well as the froth temperature at the beginning of the viscosity measurements

**Table 2**

| | Example 1 | Example 2 | Comp. Example C1 | Example 3 | Comp. Example C2 |
|---|---|---|---|---|---|
| Starting Temp. [°C] | 25. 1 | 25.6 | 24.7 | 25.6 | 25.7 |
| PLT [min:sec] | 10:18 | 16:08 | 11:22 | 12:56 | 13:06 |
| Cure Time [min:sec] | 2:00 | 3:00 | 3:30 | 2:15 | 4:00 |

Example 1shows that using catalyst A reduces the cure time by 43% while only slightly reducing the processing window as indicated by a loss of PLT by 9% when compared to C1. The decrease in cure time allows to increase line speed and thus improve productivity. Comparative Example C1, used in a 100 ft long curing oven would permit a line speed of about 28.6 ft/min. Replacing the catalyst used in C1 with the catalyst used in Example 1 would allow increasing the line speed to 50 ft/min, an increase of 75%. Catalyst B reduces cure time (Example 2) such that the line speed could be increased to 33.3 ft/min, an increase of 17%. At the same time catalyst B significantly widens the processing window as indicated by an increase of the PLT to more than 16 minutes, an increase of 42% when compared to C1. This improvement of the processing time is highly desirable in finishing lines that are prone to interruptions and processing upsets.

Example 3 shows that use of polyols containing low primary hydroxyl content is now practical as a result of the present invention. In Example C2, the cure time increases to 4:00 minutes when employing a low primary hydroxyl content polyol and a conventional delayed action catalyst, requiring further slow down in line speed as compared to C1. With the same low primary hydroxyl content polyols, however, use of catalyst A reduces the cure time to 2:15, an improvement of 44%. This is accomplished while maintaining the PLT at about 13 minutes. It is particularly noteworthy that use of catalyst A in combination with low primary hydroxyl content polyols reduces the cure time by 36% even when compared to high primary hydroxyl content polyols as used in Comparative Example C1.

### Example 4 and Comparative Example C3

Polyurethane froth adhesive formulations were made from 91 parts Q1000, 9 parts diethylene glycol, 150 parts calcium carbonate filler, and 63.5 parts Baytuft® 751. The catalysts are LC-5615 (Example C3), a prior art nickel acetylacetonate catalyst, used at 1.5 parts by weight, and a polymer-bound tin catalyst (Example 4) from Landec Corporation, Menlo Park, California. The procedures used were the same than in the preceding examples. The following Table summarizes the results. The values given in the Table are the average values of 3 or more separate measurements. The cure behavior is illustrated in Figure 1.

| | **Example 4** | **Example C3** |
|---|---|---|
| **CURE TEMPERATURE** [°C] | **CURE TIME [min:sec]** | |
| 65 | 6:15 | 84:00 |
| 85 | 4:30 | 14:30 |
| 110 | 2:40 | 8:30 |
| 150 | 1:55 | 2:30 |
| PLT Starting Temp. 25°C | 15:50 | 14:05 |
| PLT Starting Temp. 35°C | 5:44 | 5:04 |

The prior art catalyst quickly becomes unsuitable as the oven temperature is lowered from 150°C. At 110°C, the cure time of 8:30 reduces the line speed to a level that makes the process very expensive. As the cure temperature is lowered further, the prior art catalyst becomes completely unacceptable. By contrast, the catalyst used in example 4 yields practical cure times over the entire temperature range. The polymer bound tin catalyst exhibited a cure time suitable for commercial application at 65°C, allowing for laminating of polyethylene carpeting. The relative benefit increases as the cure temperature is lowered. At 65 °C, example 4 shows a more than 13-fold reduction of the cure time, i.e., 6:15 in 86 minutes. This is of particular value since the cure time reduction is achieved while providing longer PLT, even at elevated puddle temperature, i.e., 35°C.

While embodiments of the invention have been illustrated and described, it is not intended that these embodiments illustrate and describe all possible forms of the invention. Rather, the words used in the specification are words of description rather than limitation, and it is understood that various changes may be made without departing from the spirit and scope of the invention.

## Claims

1. In a process for the preparation of carpeting employing adhesives, the improvement comprising selecting as at least one of said adhesives, a polyurethane adhesive comprising:
a) an isocyanate reactive component,
b) an isocyanate-functional component, and
c) at least one urethane linkage-promoting catalyst which is a temperature critical catalyst having a sharply defined catalyst release temperature in excess of 40°C, above which an active urethane-promoting catalyst is liberated.

2. The process of claim 1 wherein said temperature critical catalyst comprises a polymer-entrained urethane catalyst.

3. The process of claim 2 wherein the polymer of said entrained urethane catalyst is a crystalline thermoplastic or a side chain crystalline polymer.

4. The process of claim 2 wherein said urethane catalyst is selected from the group consisting of bismuth-containing catalysts, tin-containing catalysts, amine-containing catalysts, and mixtures thereof.

5. The process of claim 1 wherein said adhesives are cured in a curing oven, said curing oven maintained at a temperature of about 40°C to about 75°C.

6. The process of claim 1 wherein said adhesives are cured in a curing oven, said curing oven maintained at a temperature of about 65°C to about 110°C.

7. The process of claim 1 wherein said polyol component comprises in major weight parts of polyoxypropylene polyol optionally containing oxyethylene moieties, and having a primary hydroxyl content of less than about 40 equivalent percent.

8. The process of claim 6, wherein said polyoxypropylene polyol is a polyoxypropylene/polyoxyethylene random copolymer polyol having from about 1 weight percent to about 20 weight percent random, internal oxyethylene moieties, and a primary hydroxyl content of about 30 equivalent percent or less.

9. The process of claim 1 wherein said temperature critical catalyst comprises a urethane catalyst encapsulated in a crystalline thermoplastic or a side chain crystalline polymer.

10. The process of claim 1 wherein said adhesive further comprises a conventional urethane catalyst.

11. A polyurethane carpet adhesive, comprising a froth of
a) a polyol component comprising
a)i a polyol having a molecular weight of 1500 Da or greater, and
a)ii a diol chain extender having a molecular weight below about 300 Da;
b) from 50 to about 300 parts of one or more fillers, based on 100 parts of polyol component a);
c) sufficient isocyanate component to provide an isocyanate index from about 90 to about 120; and
d) an effective amount of temperature critical catalyst containing an active urethane catalyst, and having a sharply defined catalyst release temperature in excess of 40°C.

12. The adhesive of claim 11, wherein said temperature critical catalyst comprises a crystalline thermoplastic or side chain crystalline polymer containing said urethane catalyst.

13. The adhesive of claim 11, wherein said urethane catalyst comprises a bismuth containing catalyst, a tin-containing compound, an amine-containing catalyst, or mixture thereof.

14. The adhesive of claim 11, wherein said urethane catalyst comprises a dialkyltin dicarboxylate.

15. The adhesive of claim 11 wherein said temperature critical catalyst is a polymer-bound catalyst.

16. The composition of claim 11, wherein the polymer of said polymer-bound catalyst is a side chain crystalline thermoplastic comprising a polymer or copolymer of at least one long chain aliphatic acrylate ester.

17. The composition of claim 11, wherein said adhesive exhibits a puddle life time of about 9 minutes or more, at a starting temperature of 25 °C, and a cure time of 65°C of 10 minutes or less.

18. The composition of claim 11, wherein said adhesive exhibits a puddle life time of about 5 minutes or more, at a starting temperature of 35 °C, and a cure time of 65°C of 10 minutes or less.

19. The composition of claim 11, wherein said adhesive exhibits a puddle life time of about 2 minutes or more, at a starting temperature of 45 °C, and a cure time of 65°C of 10 minutes or less.

20. The composition of claim 11, wherein said polyol component comprises in excess of 50 weight percent of a low primary hydroxyl content polyoxypropylene polyol.

21. The composition of claim 20 wherein said polyoxypropylene polyol is a polyoxypropylene polyol containing about 30 weight percent of random oxyethylene moieties.
